(19) Europäisches Patentamt
European Patent Office
Office européen des brevets

(11) **EP 4 397 727 A1**

(12) **EUROPEAN PATENT APPLICATION**
published in accordance with Art. 153(4) EPC

(43) Date of publication:
**10.07.2024   Bulletin 2024/28**

(21) Application number: **22863983.7**

(22) Date of filing: **08.06.2022**

(51) International Patent Classification (IPC):
*C09D 11/54* (2014.01)        *B41J 2/01* (2006.01)
*C09D 5/00* (2006.01)        *C09D 5/02* (2006.01)
*C09D 7/40* (2018.01)        *C09D 123/00* (2006.01)
*C09D 175/04* (2006.01)

(52) Cooperative Patent Classification (CPC):
**B41J 2/01; B41M 5/00; C09D 5/00; C09D 5/02;
C09D 7/40; C09D 7/45; C09D 7/61; C09D 7/63;
C09D 11/54; C09D 123/00; C09D 175/04;
C09D 201/00**

(86) International application number:
**PCT/JP2022/023075**

(87) International publication number:
**WO 2023/032395 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021   JP 2021141846**

(71) Applicant: **Sakata INX Corporation
Osaka-shi, Osaka 550-0002 (JP)**

(72) Inventors:
• **SANO, Takaaki**
  **Osaka-shi, Osaka 550-0002 (JP)**
• **UEDA, Eri**
  **Osaka-shi, Osaka 550-0002 (JP)**
• **MORIYASU, Kazuki**
  **Osaka-shi, Osaka 550-0002 (JP)**
• **MAEDA, Hirohito**
  **Osaka-shi, Osaka 550-0002 (JP)**

(74) Representative: **Grünecker Patent- und
Rechtsanwälte
PartG mbB
Leopoldstraße 4
80802 München (DE)**

(54) **PRIMER COMPOSITION**

(57)    An object is to provide a primer composition that has excellent storage stability, demonstrates excellent printability immediately after and 1 month after the manufacture of the primer, and also ensures that a film of the primer composition has excellent drying property, and the printed primer film has excellent transparency. As a solution, a primer composition containing a resin emulsion, cohesion promoter, surfactant, and water, as described below, is provided. The resin emulsion is at least one type selected from polyolefin-based resin emulsions and urethane-based resin emulsions; one or more surfactants (A) selected from acetylene-based surfactants and silicone-based surfactants; one or more nonionic surfactants (B) other than the surfactant(s) (A), having a HLB value of 10.0 or greater but under 15.5 and also having multiple polyoxyalkylene groups in the molecule, are selected from the group consisting of polyoxyalkylene group-containing fatty acid glyceryls, polyoxyalkylene group-containing aliphatic amines, and polyoxyalkylene group-containing sorbitan fatty acid esters; the content percentage of the nonionic surfactant(s) (B) in the primer composition is 3.0% by mass or lower; and no organic solvent is contained, or the content of organic solvent(s) in the primer composition is 1.0% by mass or lower.

## Description

### Technical Field

The present invention relates to a primer composition, a primer layer, an ink set, a printed matter, and an image formation method.

### Background Art

Printing methods, each using an ink set that has an aqueous inkjet ink composition containing pigments, etc., and a primer composition containing cohesion promoters for promoting the cohesion of the aqueous inkjet ink composition, are known (Patent Literatures 1 to 5).

Disclosed in each of these patent literatures are, for example, that the primer composition has good storage stability, and that, when the aqueous inkjet ink composition is used to print fine lines on a primer layer formed by the primer composition, good print quality (printed layer) free from smudges, etc., can be formed.

Also, Patent Literatures 6 and 7 each describe a pretreatment solution for aqueous inkjet ink compositions, containing at least one of acetylene-based surfactants and silicone-based surfactants.

### Background Art Literature

### Patent Literature

Patent Literature 1: Japanese Patent Laid-open No. 2017-61124
Patent Literature 2: Japanese Patent Laid-open No. 2019-111763
Patent Literature 3: Japanese Patent Laid-open No. 2017-88646
Patent Literature 4: Japanese Patent Laid-open No. 2018-12219
Patent Literature 5: Japanese Patent Laid-open No. 2019-73608
Patent Literature 6: Japanese Patent Laid-open No. 2021-55093
Patent Literature 7: Japanese Patent Laid-open No. 2021-54084

### Summary of the Invention

### Problems to Be Solved by the Invention

Inkjet printing, which is non-contact printing, presents a problem of marked deterioration in image quality when printing solid images (solid patterns) if the dots of aqueous inkjet ink compositions do not spread sufficiently over the primer layer, thereby creating conspicuous streaks in the solid images (solid patterns). And, the primer compositions (pretreatment solutions) disclosed in the aforementioned patent literatures leave room for improvement regarding these properties.

In addition, occurrence of streaks, etc., in solid images may also vary depending on whether or not the primer composition is in a condition immediately after manufacture; furthermore, even primer compositions having so-called "excellent storage stability" cannot always fully prevent the occurrence of streaks and mottled areas regardless of whether they are in a condition immediately after manufacture or not in a condition immediately after manufacture.

Additionally, primer layers, when applied on resin films and other highly-transparent base materials, also require high transparency.

An object of the present invention is to provide a primer composition that has excellent storage stability, demonstrates excellent printability immediately after and 1 month after the manufacture of the primer, and also ensures that a film of the primer composition has excellent drying property and the printed primer film, excellent transparency.

Another object of the present invention is to provide an ink set that can form the aforementioned primer layer, a printed matter obtained by printing using the ink set, and an image formation method using the ink set.

### Means for Solving the Problems

The inventors of the present invention found that the aforementioned objects could be achieved by the primer composition described below, and eventually completed the present invention as follows.

EP 4 397 727 A1

1. A primer composition containing a resin emulsion, cohesion promoter, surfactant, and water, wherein the primer composition is characterized in that:

> the resin emulsion includes at least one type selected from polyolefin-based resin emulsions and urethane-based resin emulsions;
> the surfactant includes one or more surfactant(s) (A) selected from acetylene-based surfactants and silicone-based surfactants, as well as nonionic surfactant(s) (B) other than the surfactants (A);
> the nonionic surfactant(s) (B) is/are nonionic surfactant(s) having a HLB value of 10.0 or greater but under 15.5 and also having multiple polyoxyalkylene groups in the molecule, and include(s) one or more nonionic surfactants selected from the group consisting of polyoxyalkylene group-containing fatty acid glyceryls, polyoxyalkylene group-containing aliphatic amines, and polyoxyalkylene group-containing sorbitan fatty acid esters;
> the content percentage of the nonionic surfactant(s) (B) in the primer composition is 3.0% by mass or lower; and
> no organic solvent is contained, or the content of organic solvent(s) in the primer composition is 1.0% by mass or lower.

2. The primer composition according to 1, characterized in that the ratio by mass of the surfactants (A) to the nonionic surfactants (B) (surfactants (A) / nonionic surfactants (B)) is 0.01 or greater but no greater than 100.
3. A primer layer characterized in that it is formed by the primer composition according to 1 or 2.
4. An ink set characterized in that it has the primer composition according to 1 or 2 and an aqueous inkjet ink composition.
5. A printed matter characterized in that it is obtained by printing using the ink set according to 4.
6. An image formation method characterized in that it uses the ink set according to 4.

**Effects of the Invention**

According to the present invention, the primer composition has excellent storage stability, demonstrates excellent printability immediately after and 1 month after the manufacture of the primer, and also ensures that a film of the primer composition has excellent drying property, and the printed primer film has excellent transparency. In particular, by using nonionic surfactant(s) (B) having the aforementioned HLB values by a specified amount, a primer layer having excellent storage stability and high transparency can be formed.

**Mode for Carrying Out the Invention**

[Primer Composition]

The primer composition proposed by the present invention contains resin emulsions, cohesion promoters, surfactants, and water, as a rule.

<Resin Emulsions>

For the resin emulsions, at least one type selected from polyolefin-based resin emulsions and urethane-based resin emulsions is used. Preferably both polyolefin-based resin emulsions and urethane-based resin emulsions are used, but only one type may be used.
The polyolefin-based resin emulsions are emulsions constituted by polyolefin-based resins dispersed in water. The polyolefin-based resins include, for example, polyethylene resins, polypropylene resins, polybutylene resins, as well as polyolefin resins comprising two or more types of ethylene, propylene, and butylene copolymerized together, for example. Also, the polyolefin resins may be, for example, modified polyolefin resins obtained by introducing amino groups, carboxyl groups, hydroxyl groups, acryloyl groups or other polymer chains to polyolefin chains; oxidized polyolefin resins whose polyolefin chains have been partially oxidized; or halogenated polyolefin resins that have been partially treated with halogen.
In particular, chlorinated polyolefin-based resin emulsions obtained by chlorinating and emulsifying polyolefin resins are preferred. The chlorinated polyolefin-based resin emulsions include, for example, chlorinated polypropylene resin emulsions, chlorinated polyethylene resin emulsions, etc., whose degree of chlorination is preferably 15 to 30%. Any of the foregoing polyolefin-based resin emulsions may be used alone, or two or more types may be combined.
Commercial products representing the polyolefin-based resin emulsion include, for example, CHEMIPEARL S100 (polyethylene-based resin emulsion, Mitsui Chemicals, Inc.), CHEMIPEARL XEP 800H (polypropylene-based resin emulsion, Mitsui Chemicals, Inc.), ARROWBASE TC-4010 (polypropylene-based resin emulsion, Unitika Ltd.), SUPERCHLON E-604 (chlorinated polypropylene emulsion, Nippon Paper Industries Co., Ltd.), etc.

For the urethane-based resin emulsions, which are emulsions constituted by polyurethane resins dispersed in water, any of anionic, cationic, or nonionic urethane-based resin emulsions may be used; however, cationic or nonionic urethane-based resin emulsions are preferred. Also, the polyurethane resins include, for example, polyether-based polyurethane resins, polyester-based polyurethane resins, polyester/polyether-based polyurethane resins, polycarbonate-based polyurethane resins, etc. Any of the foregoing urethane-based resin emulsions may be used alone, or two or more types may be combined.

Commercial products representing the urethane-based resin emulsions include, for example, SUPERFLEX 620 (cationic polyester-based polyurethane resin, DKS Co., Ltd.), SUPERFLEX 650 (cationic polycarbonate-based polyurethane resin, DKS Co., Ltd.), SUPERFLEX 500M (nonionic polyester-based polyurethane resin, DKS Co., Ltd.), SUPERFLEX E-2000 (nonionic polyester-based polyurethane resin, DKS Co., Ltd.), BIBOND PU406 (nonionic polyether-based polyurethane resin, Sumika Covestro Urethane Co., Ltd.), NeoRez R-9330 (nonionic polyester-based polyurethane emulsion, DSM Corporation), etc.

The primer composition proposed by the present invention may use any known acrylic-based resin emulsions, polyester-based resin emulsions, polyvinyl acetate-based resin emulsions, polyvinyl chloride-based resin emulsions, polybutadiene-based resin emulsions, etc., in addition to the specific resin emulsions mentioned above, to the extent that the effects of the present invention are not impaired.

The acrylic-based resin emulsions include, for example, acrylic resin emulsions, styrene-acrylic-based resin emulsions, acrylic-vinyl acetate-based resin emulsions, acrylic-vinyl chloride-based resin emulsions, acrylic-silicone-based resin emulsions, acrylic-colloidal silica-based resin emulsions, etc., of which styrene-acrylic-based resin emulsions are preferred. Also, of the foregoing acrylic-based resin emulsions, those whose content resin has a glass transition temperature of 0°C or lower are preferred.

Although it suffices that the polyester-based resin emulsions are those having a polyester framework, the polyester-based polyurethane resin emulsions disclosed in Japanese Patent Laid-open No. 2020-75954 are preferred from the viewpoint of improving the adhesion to base materials.

As for the polyvinyl acetate-based resin emulsions, the polyvinyl acetate-based resin emulsions whose content resin has a glass transition temperature of 0°C or higher but no higher than 50°C are preferred in the sense that they offer good adhesion to target recording media.

The resin solids content of the resin emulsions is preferably 0.1% by mass or higher, or more preferably 0.3% by mass or higher, or yet more preferably 1.0% by mass or higher, in the primer composition, from the viewpoint of improving bleed resistance. Also, it is preferably 15.0% by mass or lower, or more preferably 8.0% by mass or lower, or yet more preferably 6.0% by mass or lower, in the primer composition, from the viewpoint of improving storage stability.

The resin solids content of the resin emulsions is preferably 10.0% by mass or higher, or more preferably 20.0% by mass or higher, or yet more preferably 30.0% by mass or higher, in the nonvolatile components of the primer composition, from the viewpoint of improving bleed resistance. Also, it is preferably 85.0% by mass or lower, or more preferably 75.0% by mass or lower, or yet more preferably 70.0% by mass or lower, in the nonvolatile components of the primer composition, from the viewpoint of improving storage stability. It should be noted that, in the Specification, nonvolatile components represent components other than the solvents.

<Cohesion Promoters>

For the cohesion promoters, any known cohesion promoters contained in primer compositions for aqueous inkjet ink compositions may be used, including, for example, water-soluble multivalent metal salts, organic acids, cationic polymers, etc. Any of the foregoing cohesion promoters may be used alone, or two or more types may be combined.

The water-soluble multivalent metal salts include, for example, dissociative salts constituted by magnesium, calcium, strontium, zinc, copper, iron, aluminum, and other metals, along with organic acids or inorganic acids. The organic acids include, for example, fatty acids, etc., expressed by RCOOH (in the formula, R represents hydrogen or an organic group with 1 to 30 carbon atoms). Also, the inorganic acids include, for example, nitric acid, sulfuric acid, hydrogen chloride (hydrochloric acid), hydrogen bromide, hydrogen iodide, chloric acid, bromic acid, carbonic acid, phosphoric acid, etc. The water-soluble multivalent metal salts specifically include, for example, calcium acetate, calcium chloride, magnesium chloride, etc.

The organic acids include, for example, lactic acid, malic acid, citric acid, oxalic acid, malonic acid, acetic acid, propionic acid, fumaric acid, etc.

The cationic polymers include, for example, polymers having primary to tertiary amino groups, polymers having quaternary ammonium bases, etc. The cationic polymers specifically include homopolymers of monomers having primary to tertiary amino groups and salts thereof or quaternary ammonium bases (cationic monomers), as well as copolymers or condensation polymers comprising these cationic monomers and other monomers (hereinafter referred to as "noncationic monomers"). The cationic polymers may be used in either a water-soluble polymer form or water-dispersible latex particle form.

The content of the cohesion promoters is preferably 0.05% by mass or higher, or more preferably 0.5% by mass or higher, or yet more preferably 1.0% by mass or higher, in the primer composition, from the viewpoint of improving clarity and bleed resistance of the printed matter. Also, it is preferably 15.0% by mass or lower, or more preferably 10.0% by mass or lower, or yet more preferably 5.0% by mass or lower, in the primary composition, from the viewpoint of improving storage stability.

It is preferably 1.0% by mass or higher, or more preferably 15.0% by mass or higher, or yet more preferably 25.0% by mass or higher, in all nonvolatile components of the primer composition. Also, it is preferably 70.0% by mass or lower, or more preferably 60.0% by mass or lower, or yet more preferably 50.0% by mass or lower, or most preferably 40.0% by mass or lower, in the primer composition, from the viewpoint of improving storage stability.

<Surfactants>

The surfactants include one or more surfactants (A) selected from the group that consists of acetylene-based surfactants and silicone-based surfactants, as well as nonionic surfactants (B) other than the surfactants (A).

<Surfactants (A)>

The surfactants (A) are one or more surfactants selected from the group that consists of acetylene-based surfactants and silicone-based surfactants. Any of the foregoing surfactants (A) may be used alone, or two or more types may be combined.

For the acetylene-based surfactants, any known acetylene glycol-based surfactants and acetylene alcohol-based surfactants may be adopted. Commercial products representing the known acetylene-based surfactants that may be used include, for example, DYNOL 607, DYNOL 609, OLFINE E-1004, OLFINE E-1010, OLFINE E-1020, OLFINE PD-001, OLFINE PD-002W, OLFINE PD-004, OLFINE PD-005, OLFINE EXP. 4001, OLFINE EXP. 4200, OLFINE EXP. 4123, OLFINE EXP. 4300 (all by Nissin Chemical Industry Co., Ltd.); SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (all by EVONIK Industries AG), etc.

For the silicone-based surfactants, any known silicone-based surfactants may be used, including, for example, commercial products such as BYK-307, BYK-331, BYK-333, BYK-347, BYK-348, BYK-349, BYK-345, BYK-378, BYK-3455 (all by BYK-Chemie GmbH), etc.

<Nonionic Surfactants (B)>

The nonionic surfactants (B) are nonionic surfactants other than the surfactants (A), having a HLB value of 10.0 or greater but under 15.5 and also having multiple polyoxyalkylene groups in the molecule. Any of the foregoing surfactants (B) may be used alone, or two or more types may be combined.

The nonionic surfactants (B) have a HLB value of 10.0 or greater but under 15.5, where the HLB value is preferably 11.0 or greater, or more preferably 12.0 or greater, or yet more preferably 13.0 or greater, from the viewpoint of improving storage stability. Also, the HLB value is preferably 15.4 or lower. It should be noted that, as disclosed in Patent Literatures 1 and 2 mentioned above, the HLB value is an indicator representing the degree of hydrophilicity/lipophilicity of a surfactant as calculated according to Griffin's method, where the lower the HLB value, the higher the lipophilicity, and the greater the HLB value, the higher the hydrophilicity.

Also, the nonionic surfactants (B) have multiple polyoxyalkylene groups (two or more polyoxyalkylene chains) in the molecule. Preferably the nonionic surfactants (B) have at least polyoxyethylene groups from the viewpoint of improving printability of solid images using the aqueous inkjet ink composition as well as their bleed resistance. It should be noted that, in the Specification, a polyoxyethylene group constituted by a polyoxyethylene group and a polyoxypropylene group directly linked together (condensed) is counted as one chain.

The nonionic surfactants (B) are not limited in any way in terms of their molecular framework so long as they have a HLB value as described above as well as multiple polyoxyalkylene groups (two or more polyoxyalkylene chains) in the molecule, and they include, for example, polyoxyalkylene group-containing fatty acid glyceryls, polyoxyalkylene group-containing aliphatic amines, polyoxyalkylene group-containing sorbitan fatty acid esters, etc.

The content of the surfactants (A) is preferably 0.005% by mass or higher, or more preferably 0.01% by mass or higher, or yet more preferably 0.1% by mass or higher, in the primer composition, from the viewpoint of improving printability of the primer composition. Also, it is preferably 2.0% by mass or lower, or more preferably 1.5% by mass or lower, or yet more preferably 1.0% by mass or lower, or most preferably 0.8% by mass or lower, in the primer composition, from the viewpoint of improving bleed resistance.

The content of the surfactants (A) in all nonvolatile components of the primer composition is preferably 0.1% by mass or higher, or more preferably 4.0% by mass or higher, or yet more preferably 6.0% by mass or higher. Also, it is preferably 20.0% by mass or lower, or more preferably 15.0% by mass or lower, or yet more preferably 10.0% by mass or lower.

The content of the nonionic surfactants (B) is 4.0% by mass or lower in the primer composition. The content of the nonionic surfactants (B) is preferably 0.005% by mass or higher, or more preferably 0.01% by mass or higher, or yet more preferably 0.1% by mass or higher, in the primer composition, from the viewpoint of improving printability of solid images. Also, it is preferably 2.0% by mass or lower, or more preferably 1.5% by mass or lower, or yet more preferably 1.0% by mass or lower, or most preferably 0.8% by mass or lower, in the primer composition, from the viewpoint of improving bleed resistance and transparency of the primer layer.

The content of the surfactants (B) in all nonvolatile components of the primer composition is preferably 0.1% by mass or higher, or more preferably 5.0% by mass or higher, or yet more preferably 8.0% by mass or higher. Also, it is preferably 15.0% by mass or lower, or more preferably 13.0% by mass or lower, or yet more preferably 10.0% by mass or lower.

The ratio by mass of the surfactants (A) and the nonionic surfactants (B) (surfactants (A) / nonionic surfactants (B) (ratio of the mass of the surfactants (A) contained relative to the mass of the nonionic surfactants (B) contained)) is preferably 0.01 or higher, or more preferably 0.1 or higher, or yet more preferably 0.5 or higher, from the viewpoint of improving printability of the primer composition, printability of solid images and their bleed resistance, and transparency of the primer layer. Also, it is preferably 100 or lower, or more preferably 10.0 or lower, or yet more preferably 5.0 or lower.

For the surfactants in the present invention, any known surfactants other than the surfactants (A) and nonionic surfactants (B) (other surfactants) may be contained to the extent that the effects of the present invention are not impaired; however, they may not be contained. The other surfactants include, for example, nonionic surfactants, cationic surfactants, anionic surfactants, and betaine surfactants having a HLB value of under 10.0 or 15.5 or greater. Specific examples of the other surfactants include, for example, fluorine-based surfactants, etc. It should be noted, however, that nonionic surfactants having a HLB value of 15.5 or greater but no greater than 20.0 may not be contained.

<Organic Solvents>

The primer composition proposed by the present invention contains no organic solvents, or it contains organic solvents by a content of 1.0% by mass or lower in the primer composition. The content of organic solvents is preferably 0.8% by mass or lower, or more preferably 0.6% by mass or lower. Additionally, from the viewpoint of drying property, it is even more preferable that organic solvents are not contained.

For the organic solvents, any known organic solvents may be used, including, for example, monoalcohols, polyalcohols, lower alkyl ethers of polyalcohols, nitrogen-containing compounds, ketones, ethers, esters, etc. Any of the foregoing organic solvents may be used alone, or two or more types may be combined.

The monoalcohols include, for example, methanol, ethanol, 1-propanol, 1-butanol, 3-methoxy-3-methyl-1-butanol, etc.

The polyalcohols include, for example, ethylene glycol, propylene glycol, glycerin, diethylene glycol, 1,3-butylene glycol, 1,4-butylene glycol, 1,2-pentanediol, 1,5-pentanediol, neopentyl glycol, 1,2-hexanediol, 1,6-hexanediol, 1,2-cyclohexanediol, heptanediol, 1,8-octanediol, etc.

The lower alkyl ethers of polyalcohols include, for example, ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, dipropylene glycol mono-n-butyl ether, etc.

The nitrogen-containing compounds include, for example, pyrrolidone, N-methyl-2-pyrrolidone, etc.

The ketones include, for example, acetone, methyl ethyl ketone, methyl butyl ketone, methyl isobutyl ketone, diisopropyl ketone, cyclopentanone, cyclohexanone, etc.

The ethers include, for example, isopropyl ether, n-butyl ether, tetrahydrofuran, tetrahydropyran, 1,4-dioxane, etc.

The esters include, for example, propylene carbonate, methyl acetate, ethyl acetate, propyl acetate, isopropyl acetate, butyl acetate, isobutyl acetate, amyl acetate, ethyl lactate, ethyl butyrate, dibutyl phthalate, dioctyl phthalate, as well as ε-caprolactone, ε-caprolactam, and other cyclic esters, and the like.

<Water>

The water includes water contained in the resin emulsions, and water added to adjust the concentration of the primer composition proposed by the present invention, for example. The water may be, for example, ion-exchanged water, pure water, distilled water, industrial water, etc. Any of the foregoing waters may be used alone, or two or more types may be combined.

The content percentage of the water (including water contained in each component) is preferably 70.0% by mass or higher, or more preferably 80.0% by mass or higher, from the viewpoint of improving coating film drying property, and preferably 98.0% by mass or lower, or more preferably 95.0% by mass or lower, from the viewpoint of improving discharge stability.

The primer composition may contain hydrazide compounds as they improve adhesion between the primer and the base material by interacting with the base material surface. The hydrazide compounds are preferably dihydrazide compounds, including, for example, oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide, etc. The content of the hydrazide compounds is normally around 0.2% by mass or higher but no higher than 5.0% by mass, in the primer composition.

The primer composition proposed by the present invention may have optional components, in addition to the aforementioned components, blended in it as necessary. Examples of optional components include various types of additives. Additives include storability improving agents, defoaming agents, adhesion imparting agents, fillers, thickening agents, etc.

The storability improving agents include hindered amines, UV absorbents, antioxidants, etc. The hindered amines include, for example, those of the N-CH3 type, N-H type, N-OR type, etc. The UV absorbents include, for example, benzophenone-based UV absorbents, benzotriazole-based UV absorbents, salicylate-based UV absorbents, hydroxyphenyl triazine-based UV absorbents, cyanoacrylate-based UV absorbents, nickel complex salt-based UV absorbents, etc. The antioxidants include, for example, phenol-based antioxidants, amine-based antioxidants, sulfur-based antioxidants, phosphorus-based antioxidants, etc. If storability improving agents are used, the content of the storability improving agents is normally around 0.05 to 1.0% by mass in the primer composition.

The defoaming agents include, for example, silicone-based defoaming agents, Pluronic (registered trademark)-based defoaming agents, etc. If defoaming agents are used, the content of the defoaming agents is normally around 0.05 to 1.0% by mass in the primer composition.

The adhesion imparting agents include, for example, silane coupling agents, etc. If adhesion imparting agents are used, the content of the adhesion imparting agents is normally around 0.5 to 5.0% by mass in the primer composition.

The fillers include, for example, calcium carbonate, silica, kaolin, clay, barium sulfate, and other extender pigments. If fillers are used, the content of the fillers is normally around 0.1 to 10.0% by mass in the primer composition.

The thickening agents include, for example, inorganic-based thickening agents, polysaccharides, and derivatives thereof, various polymer compounds, etc. If thickening agents are used, the content of the thickening agents is normally around 0.1 to 10.0% by mass in the primer composition.

<Manufacturing of Primer Composition and Application of Primer Composition>

The method for manufacturing the primer composition is not specifically limited, and it may be manufactured, for example, by adding the resin emulsions, cohesion promoters, surfactants, and if necessary, various types of additives, etc., to water, and mixing them under agitation using a disperser, etc.

The primer composition for gravure printing proposed by the present invention permits use of any desired means for applying the primer composition so long as the means allows for even application. Among such means, gravure printing, spray application, roller application, application using a bar coater, etc., may be adopted. The conditions for any of these applications are not specifically limited and may be determined as deemed appropriate according to the physical properties of the primer composition, properties, and material of the application target being a printing base material, and the like.

[Ink Set]

The ink set proposed by the present invention has the aforesaid primer composition and an aqueous inkjet ink composition.

The aqueous inkjet ink composition is not specifically limited and any of known aqueous inkjet ink compositions may be used, including, for example, ink compositions containing pigments, alkali-soluble resins, resin emulsions, surfactants, organic solvents, water, and the like.

For the pigments, organic pigments and inorganic pigments used for aqueous inkjet ink compositions may be used. The organic pigments include, for example, dye lake pigments, azo-based pigments, benzimidazolone-based pigments, phthalocyanine-based pigments, quinacridone-based pigments, anthraquinone-based pigments, dioxazine-based pigments, indigo-based pigments, thioindigo-based pigments, perylene-based pigments, perinone-based pigments, diketopyrrolopyrrole-based pigments, isoindolinone-based pigments, nitro-based pigments, nitroso-based pigments, flavanthrone-based pigments, quinophthalone-based pigments, pyranthrone-based pigments, indanthrone-based pigments, etc. Also, the inorganic pigments include, for example, carbon black, titanium oxide, zinc oxide, red iron oxide, graphite, iron black, chrome oxide green, aluminum hydroxide, etc. The pigments may be those that have been surface-treated with known surface-treatment agents. Any of the foregoing pigments may be used alone, or two or more types may be combined.

Specific examples of the pigments are listed below by each representative hue. Yellow pigments include, for example, C. I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, etc.

Magenta pigments include, for example, C. I. Pigment Red 5, 7, 12, 22, 38, 48:1, 482, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C. I. Pigment Violet 19, etc.

Cyan pigments include, for example, C. I. Pigment Blue 1, 2, 3, 15, 15:1, 15:2, 15:3, 15:4, 15:6, 16, 18, 22, 27, 29, 60, etc.

Black pigments include, for example, carbon black (C. I. Pigment Black 7), etc.

White pigments include, for example, titanium oxide, aluminum oxide, etc., which may have been surface-treated with alumina, silica, or any of various other materials.

The content percentage of the pigments is, in the aqueous inkjet ink composition, preferably 1.0% by mass or higher, or more preferably 2.0% by mass or higher, from the viewpoint of improving image printing density of the printed matter, and preferably 10.0% by mass or lower, or more preferably 8.0% by mass or lower, from the viewpoint of improving discharge stability. It should be noted, however, that if the pigments are white pigments, the content percentage of the white pigments is preferably 4.0% by mass or higher, or more preferably 8.0% by mass or higher, and preferably 30.0% by mass or lower, or more preferably 20.0% by mass or lower, in the aqueous inkjet ink composition.

<Alkali-soluble Resins>

Although the alkali-soluble resins are not specifically limited so long as they are alkali-soluble resins that can be utilized for dispersing pigments, or as binders, in standard inks and paints and can be dissolved in aqueous media in the presence of basic compounds, resins containing one or two or more types of anionic groups including carboxyl group, sulfonic acid group, phosphonic acid group ($-P (=O) (OH_2)$), etc., are preferred.

Preferably the alkali-soluble resins further have, in the molecule, hydrophobic parts for improving the adsorptivity primarily with respect to pigments. The hydrophobic parts that are introduced to the molecule include, for example, long-chain alkyl groups, alicyclic or aromatic cyclic hydrocarbon groups and other hydrophobic groups.

The acid value of each of the alkali-soluble resins is preferably 40 mgKOH/g or greater, or more preferably 70 mgKOH/g or greater, from the viewpoint of increasing its solubility in aqueous media. Also, the acid value of each of the alkali-soluble resins is preferably 300 mgKOH/g or lower, or more preferably 250 mgKOH/g or lower, from the viewpoint of improving water resistance of the printed matter. It should be noted that the aforementioned acid value is a theoretical acid value indicating how many milligrams of potassium hydroxide are theoretically needed to neutralize 1 gram of the alkali-soluble resin, calculated arithmetically based on the compositional makeup of the monomers used to synthesize the alkali-soluble resin.

The glass transition temperature of each of the alkali-soluble resins is preferably 0°C or higher, or more preferably 10°C or higher, from the viewpoint of improving the anti-blocking property of the printed matter. The glass transition temperature of each of the alkali-soluble resins is preferably 100°C or lower, or more preferably 80°C or lower, from the viewpoint of improving bending tolerance property of the printed matter.

The glass transition temperature of each of the alkali-soluble resins, if the alkali-soluble resin is an acrylic-based copolymer resin, represents a theoretical glass transition temperature obtained according to Wood's equation below:

$$\text{Wood's equation: } 1/Tg = W1/Tg1 + W2/Tg2 + W3/Tg3 + \ldots + Wx/Tgx$$

[In the formula, Tg1 to Tgx represent the glass transition temperatures of homopolymers comprising the alkali-soluble resin's constituent monomers 1, 2, 3, ..., x, respectively, W1 to Wx represent the polymerization ratios of monomers 1, 2, 3, ... , x, respectively, and Tg represents the theoretical glass transition temperature. It should be noted that, in Wood's equation, glass transition temperatures are absolute temperatures.]

The glass transition temperature of each of the alkali-soluble resins, if the alkali-soluble resin is other than an acrylic-based copolymer resin, represents a measured glass transition temperature obtained by thermal analysis. The method for thermal analysis conforms to JIS K 7121 (Testing Methods for Transition Temperatures of Plastics) and, as an example, the glass transition temperature can be measured using the Pyris 1 DSC manufactured by PerkinElmer, Inc., under the conditions of 20°C/min in rate of temperature rise and 20 mL/min in flow rate of nitrogen gas.

The weight-average molecular weight of each of the alkali-soluble resins is preferably 5,000 or greater, or more preferably 10,000 or greater, from the viewpoint of improving water resistance of the printed matter. The weight-average molecular weight of each of the alkali-soluble resins is preferably 100,000 or smaller, or more preferably 50,000 or smaller, from the viewpoint of increasing its solubility in aqueous media.

The aforementioned weight-average molecular weight can be measured according to the gel permeation chromatography (GPC) method. As an example, a chromatography is performed using the Water 2690 (Waters Corp.) as a GPC system, PLgel 5 μm MIXED-D (Polymer Laboratories Inc.) as a column, tetrahydrofuran as a developing solvent, and an RI detector, under the conditions of 25°C in column temperature, 1 mL/min in flow rate, 10 mg/mL in sample injection concentration, and 100 μL in injection volume, to obtain a weight-average molecular weight in terms of polystyrene.

The alkali-soluble resins include, for example, acrylic-based copolymer resins, maleic acid-based copolymer resins, polyester resins and polyurethane resins obtained by condensation polymerization reaction, and the like. The materials from which to synthesize these alkali-soluble resins are disclosed in Japanese Patent Laid-open No. 2000-94825, for example, and acrylic-based copolymer resins, maleic acid-based copolymer resins, polyester-based resins, polyurethane-based resins, etc., obtained using the materials described in the laid-open publication can be utilized. Furthermore, resins obtained using other materials besides the above can also be utilized. Any of the foregoing alkali-soluble resins may be used alone, or two or more types may be combined.

For the acrylic-based copolymer resins, those obtained by polymerizing a mixture of anionic group-containing monomers and other monomers copolymerizable therewith, in a solvent and in the presence of a standard radical-generating agent (for example, benzoyl peroxide, tertiary butyl peroxybenzoate, azobisisobutyronitrile, etc.) may be used.

The anionic group-containing monomers include, for example, monomers having anionic group of at least one type selected from the group that consists of carboxyl groups, sulfonic acid groups, and phosphonic acid groups, of which monomers having carboxyl groups are particularly preferred.

The monomers having carboxyl groups include, for example, acrylic acid, methacrylic acid, crotonic acid, itaconic acid, maleic acid, fumaric acid, 2-carboxyethyl (meth)acrylate, 2-carboxypropyl (meth)acrylate, maleic acid anhydride, fumaric acid anhydride, maleic acid half ester, etc. Also, the monomers having sulfonic acid groups include, for example, sulfoethyl methacrylate, etc. Also, the monomers having phosphonic acid groups include, for example, phosphonoethyl methacrylate, etc.

For the other monomers copolymerizable with anionic group-containing monomers, preferably hydrophobic group-containing monomers are contained from the viewpoint of improving adsorptivity with respect to pigments.

The hydrophobic group-containing monomers include, for example, monomers having long-chain alkyl group including alkyl esters of (meth)acrylic acids or other radically polymerizable unsaturated carboxylic acids with 8 or more carbon atoms (for example, 2-ethylhexyl (meth)acrylate, octyl (meth)acrylate, lauryl (meth)acrylate, stearyl (meth)acrylate, 2-hydroxystearyl (meth)acrylate, etc.), alkyl vinyl ethers with 8 or more carbon atoms (for example, dodecyl vinyl ether, etc.), and vinyl esters of fatty acids with 8 or more carbon atoms (for example, vinyl 2-ethylhexanoate, vinyl laurate, vinyl stearate, etc.); monomers having alicyclic hydrocarbon groups including cyclohexyl (meth)acrylate, etc.; and monomers having aromatic hydrocarbon groups including benzyl (meth)acrylate, styrene, α-methyl styrene, vinyl toluene, and other styrene-based monomers, and the like. Any of the foregoing hydrophobic group-containing monomers may be used alone, or two or more types may be combined.

For the other monomers copolymerizable with anionic group-containing monomers, hydrophilic group-containing monomers may be contained from the viewpoint of inhibiting cohesion of the alkali-soluble resins in aqueous media.

The hydrophilic group-containing monomers include, for example, monomers having (poly)oxyalkylene chains including, for example, esterified products of methoxypolyethylene glycol, methoxypolyethylene polypropylene glycol, ethoxypolyethylene glycol, ethoxypolyethylene polypropylene glycol, propoxypolyethylene glycol, propoxypolyethylene polypropylene glycol or other single- end alkyl-capped (poly)alkylene glycol and (meth)acrylic acid or other radically polymerizable unsaturated carboxylic acid, ethylene oxide adducts and/or propylene oxide adducts to (meth)acrylic acids or other radically polymerizable unsaturated carboxylic acids, etc.; basic group-containing monomers including, for example, 1-vinyl-2-pyrrolidone, 1-vinyl-3-pyrrolidone and other vinylpyrrolidones, 2-vinylpyridine, 4-vinylpyridine, 5-methyl-2-vinylpyridine, 5-ethyl-2-vinylpyridine and other vinylpyridines, 1-vinylimidazole, 1-vinyl-2-methylimidazole and other vinylimidazoles, 3-vinylpiperidine, N-methyl-3-vinylpiperidine and other vinylpiperidines, dimethylaminoethyl (meth)acrylate, diethylaminoethyl (meth)acrylate, tert-butylaminoethyl (meth)acrylate, (meth)acrylamide, N-methylol(meth)acrylamide, N-butoxymethyl(meth)acrylamide, N-methoxy(meth)acrylamide, N-ethoxy(meth)acrylamide, N-dimethylacrylamide, N-propylacrylamide and other nitrogen-containing derivatives of (meth)acrylic acids; monomers having hydroxyl groups including, for example, hydroxyethyl (meth)acrylate, hydroxypropyl (meth)acrylate and other hydroxyalkyl esters of (meth)acrylic acids; and monomers having epoxy groups including, for example, glycidyl (meth)acrylate, etc., for example. Any of the foregoing hydrophilic group-containing monomers may be used alone, or two or more types may be combined.

The other copolymerizable monomers besides the hydrophobic group-containing monomers and hydrophilic group-containing monomers include, for example, alkyl esters of methyl (meth)acrylate, ethyl (meth)acrylate, propyl (meth)acrylate, isopropyl (meth)acrylate, butyl (meth)acrylate, hexyl (meth)acrylate, and other (meth)acrylic acids with fewer than 8 carbon atoms, etc. Any of the foregoing other copolymerizable monomers besides the hydrophobic group-containing monomers and hydrophilic group-containing monomers may be used alone, or two or more types may be combined.

The alkali-soluble resins may use bi- or higher-functional crosslinking agents from the viewpoint of crosslinking the resins to an appropriate degree and thereby inhibiting pigment cohesion.

It suffices that the bi- or higher-functional crosslinking agents are those having two or more reactive functional groups in the molecule in order to react with the functional groups of the alkali-crosslinking resins. The reactive functional groups include, for example, epoxy groups, hydroxyl groups, isocyanate groups, amino groups, aziridine groups, etc. Any of the foregoing bi- or higher-functional crosslinking agents may be used alone, or two or more types may be combined.

The content of the alkali-soluble resins is preferably 5.0 parts by mass or higher, or more preferably 15.0 parts by mass or higher, relative to 100.0 parts by mass representing the pigments, from the viewpoint of increasing pigment dispersibility. The content of the alkali-soluble resins is preferably 100.0 parts by mass or lower, or more preferably 80.0 parts by mass or lower, or yet more preferably 60.0 parts by mass or lower, relative to 100.0 parts by mass representing the pigments, from the viewpoint of lowering viscosity of the aqueous inkjet ink composition.

<Resin Emulsions>

For the resin emulsions, any known resin emulsions used in aqueous inkjet ink compositions may be used, including, for example, acrylic-based resin emulsions, styrene-acrylic-based resin emulsions, polyester-based resin emulsions, polyurethane-based resin emulsions, polyvinyl acetate-based resin emulsions, polyvinyl chloride-based resin emulsions, polybutadiene-based resin emulsions, polyolefin-based resin emulsions, etc. Preferably the resin emulsions each have a glass transition temperature of resin of 20°C or lower from the viewpoint of improving drying property of the coating film on the printed matter and its adhesion to the base material. It should be noted that the glass transition temperature is obtained by differential scanning calorimetry (DSC) and normally calculated using the midpoint of the temperature range in which glass transition occurs. Any of the foregoing resin emulsions may be used alone, or two or more types may be combined.

The content percentage of the (resin) solids in the resin emulsions is, in the aqueous inkjet ink composition, preferably 1.0% by mass or higher, or more preferably 3.0% by mass or higher, from the viewpoint of improving print quality and abrasion resistance, and preferably 10.0% by mass or lower, or more preferably 8.0% by mass or lower, from the viewpoint of improving print quality and storage stability.

<Surfactants>

For the surfactants, any known surfactants used in aqueous inkjet ink compositions may be used, including, for example, nonionic surfactants, cationic surfactants, anionic surfactants, and betaine surfactants. Specific examples of the surfactants include, for example, silicone-based surfactants, fluorine-based surfactants, acetylene-based surfactants, etc. Any of the foregoing surfactants may be used alone, or two or more types may be combined.

The content percentage of the surfactants is, in the aqueous inkjet ink composition, preferably 0.1% by mass or higher, or more preferably 0.5% by mass or higher, from the viewpoint of improving dot expandability and solid uniformity on the printed matter, and preferably 3.0% by mass or lower, or more preferably 2.0% by mass or lower, from the viewpoint of improving storage stability.

<Organic Solvents>

For the organic solvents, any known organic solvents used in aqueous inkjet ink compositions may be used, including, for example, monoalcohols, polyalcohols, lower alkyl ethers of polyalcohols, nitrogen-containing compounds, ketones, ethers, esters, etc. Any of the foregoing organic solvents may be used alone, or two or more types may be combined.

Specific solvents are the same as the aforementioned organic solvents that may be used in the primer composition.

The organic solvents preferably include at least one type selected from the group that consists of monoalcohols, polyalcohols, lower alkyl ethers of polyalcohols, and nitrogen-containing compounds, or more preferably include at least one type selected from the group that consists of propylene glycol, glycerin, diethylene glycol, ethylene glycol monobutyl ether, diethylene glycol monobutyl ether, and 3-methoxy-3-methyl-1-butanol, from the viewpoint of inhibiting the ink composition from drying in inkjet nozzles and of the ease of forming ink layers (films) on base materials.

The content percentage of the organic solvents is, in the aqueous inkjet ink composition, preferably 15.0% by mass or higher, or more preferably 20.0% by mass or higher, from the viewpoint of improving discharge stability, and preferably 60.0% by mass or lower, or more preferably 50.0% by mass or lower, from the viewpoint of improving coating film drying property.

<Water>

The water under the present invention includes water representing the aqueous medium contained in the pigment-dispersed liquid described below, and water added to adjust the concentration of the aqueous inkjet ink composition proposed by the present invention, for example. The water may be, for example, ion-exchanged water, pure water, distilled water, industrial water, etc. Any of the foregoing water may be used alone, or two or more types may be combined.

The content percentage of the water (including water contained in each component) is, in the aqueous inkjet ink composition, preferably 40.0% by mass or higher, or more preferably 50.0% by mass or higher, from the viewpoint of improving coating film drying property, and preferably 70.0% by mass or lower, or more preferably 60.0% by mass or lower, from the viewpoint of improving discharge property.

<Basic Compounds>

Preferably the aqueous inkjet ink composition contains basic compounds from the viewpoint of dissolving the alkali-soluble resins. The basic compounds include, for example, sodium hydroxide, potassium hydroxide, and other inorganic basic compounds; and ammonia, methylamine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, N-ethylmorpholine, and other organic basic compounds, and the like. Any of the foregoing basic compounds may be used alone, or two or more types may be combined.

It suffices that the content percentage of the basic compounds in the aqueous inkjet ink composition corresponds to an amount that causes the alkali-soluble resins to dissolve in the medium; however, normally it is preferably 0.05% by mass or higher, or more preferably 0.1% by mass or higher, from the viewpoint of increasing dispersion stability of the alkali-soluble resins, and preferably 1.0% by mass or lower, or more preferably 0.5% by mass or lower, from the viewpoint of increasing water resistance of the printed matter.

The aqueous inkjet ink composition proposed by the present invention may further have any known resins, pigment dispersants, antifungal agents, rustproofing agents, thickening agents, antioxidants, UV absorbents, storability improving agents, defoaming agents, pH-adjusting agents and other additives added to it according to the purpose.

<Method for Preparing Aqueous Inkjet Ink Composition>

The method for preparing (manufacturing) the aqueous inkjet ink composition is not specifically limited, and simply the aforementioned components can be added in order, or all at once, and mixed together; however, examples include, for example, (1) a method whereby an aqueous resin varnish constituted by the alkali-soluble resins dissolved in water in the presence of the basic compounds, is mixed with the pigments, and if necessary, pigment dispersants, etc., after which any of various types of dispersion machines such as ball mill, attritor, roll mill, sand mill, agitator mill, etc., is used to prepare a pigment-dispersed liquid (ink base), to which the remaining materials are added further, to prepare the aqueous inkjet ink composition; and (2) a method whereby the pigments are dispersed according to the aforementioned method and then the acid precipitation method, or the ion-exchange means described in Domestic Republication of International Patent Laid-open No. WO2005/116147, for example, is used to obtain resin-coated pigments comprising the pigments and the alkali-soluble resins precipitated on their surface, after which the obtained resin-coated pigments are neutralized with the basic compounds and redispersed in water using any of various types of dispersion machines (high-speed agitation device, etc.), to which the remaining materials are added further, to prepare the aqueous inkjet ink composition.

The aqueous inkjet ink composition has an initial post-manufacturing viscosity in a range of 2.0 to 15.0 mPa•s, or preferably 3.0 to 12.0 mPa•s. The viscosity can be measured using a type-E viscometer (product name: RE100L Viscometer, Toki Sangyo Co., Ltd.), for example.

[Printed Matter]

The printed matter proposed by the present invention is obtained by printing an ink set having the aqueous inkjet ink composition and the primer composition. To be specific, it is obtained by an image formation method that involves coating the primer composition on a base material and drying it to form a primer layer, and then printing the aqueous inkjet ink composition over the primer layer using an inkjet printer. The methods for coating the primer composition include coating methods using various types of coating devices such as blade coater, air-knife coater, roll coater, bar coater, gravure coater, rod-blade coater, lip coater, curtain coater, die coater, inkjet, etc.

The base material may be, for example, a nonabsorbent printing medium such as art paper, special inkjet paper, glossy inkjet paper, or other coated paper, polyolefin film, polyester film, nylon film, polyvinyl chloride sheet, or other plastic-based base material; standard paper, offset paper, or other uncoated paper; or cotton or other fabric, for example, of which a nonabsorbent printing medium is preferred, or a plastic-based base material is more preferred, from the viewpoint of good adhesion to the primer layer.

**Examples**

The present invention is explained below using examples, etc.; however, the present invention is not limited to these examples, etc., alone. It should be noted that, unless otherwise specified, "%" refers to "% by mass," while "part" refers to "part by mass" (numerical values shown in the tables represent parts by mass). In addition, the contents of the substances other than water in Table 1 indicate the contents of their nonvolatile components; for example, the content of a resin emulsion does not include water used as a solvent, while water derived from a resin emulsion is included in the content of water in Table 1.

<Examples and Comparative Examples>

<Manufacturing of Primer Compositions>

The components shown in Table 1 were mixed under agitation according to the content percentages by mass per Table 1, to manufacture the primer compositions in the Examples and Comparative Examples.

(Surfactants A)

Acetylene-based: OLFINE E1010, acetylenediol EO adduct (Active ingredient 100%, HLB: 13, Nissin Chemical Industry Co., Ltd.)
Silicone-based: BYK-331, polysiloxane derivative (Active ingredient 98%, BYK-Chemie GmbH)

(Surfactants B)

NIKKOL TMGS-15V: Polyoxyethylene fatty acid glyceryl (Active ingredient 100%, HLB: 13.5, Nikko Chemicals Co., Ltd.)
AMIET 320: Polyoxyethylene aliphatic amine (Active ingredient 100%, HLB: 15.4, Kao Corporation)
NIKKOL TS-10V: Polyoxyethylene sorbitan fatty acid ester (Active ingredient 100%, HLB: 14.9, Nikko Chemicals Co., Ltd.)

(Other Surfactants)

AMIET 105: Polyoxyethylene alkylamine (Active ingredient 100%, HLB: 9.8, Kao Corporation)
NONION LT-280W: Polyoxyethylene sorbitan fatty acid ester (Active ingredient 100%, HLB: 19.0, NOF Corporation)
EMULGEN 1108: Polyoxyethylene alkyl ether (Active ingredient 100%, HLB: 13.5, Kao Corporation)

<Resin Emulsions>

Polyolefin-based resin: SUPERCHLON E-604 (Nv: 40%, chlorinated polypropylene emulsion, Nippon Paper Industries Co., Ltd.)
Polyurethane-based resin: NeoRez R-9330 (Nv: 40%, polyester polyurethane emulsion, DSM Corporation)
Styrene-acrylic-based resin: MOWINYL 966A (Nv: 45%, styrene-acrylic emulsion, Japan Coating Resin Co., Ltd.)

<Preparation of Primer Layers>

The inkjet recording primer inks in the Examples and Comparative Examples were applied on OPP films (P2161, 25 μm, Toyobo Co., Ltd.) using a #4 bar coater, and then heated and dried, to prepare the solid primer ink printed matters (primer layers) in the Examples and Comparative Examples. The primer layers, at the time, had a thickness of 1 μm.

<Storage stability>

The primer compositions manufactured above were each filled in a glass vial and kept stationary at 60°C for 7 days, after which the primer composition was visually observed for the condition of separation/deposits or absence thereof, to evaluate storage stability according to the criteria below.

[Evaluation Criteria]

[0121]

　　○: Observed are no separation/precipitation of the liquid phase and a homogenous state.
　　△: Observed is slight separation/precipitation of the liquid phase.
　　×: Observed is separation/precipitation of the liquid phase or an inhomogeneous state.

<Primer Printability>

• Immediately after Manufacture

Using Epson's inkjet printer PX-105, an aqueous inkjet ink composition was discharged onto the surface of the printed matter that had been coated with the primer in each of the Examples and Comparative Examples within 24 hours of its manufacture, to print fine lines of approx. 0.3 mm as well as solid images, and the obtained images were visually observed to evaluate the image quality according to the evaluation criteria below.

Evaluation Criteria

[0123]

　　○: There are no smudges, mottled areas, or streaks.
　　△: There are slight smudges, mottled areas, and/or streaks (suitable for practical use).
　　×: Smudges, mottled areas, and/or streaks are clearly visible (not suitable for practical use).

• 1 Month after Manufacture

Using Epson's inkjet printer PX-105, an aqueous inkjet ink composition was discharged onto the surface of the printed matter that had been coated with the primer in each of the Examples and Comparative Examples stored for 1 month after its manufacture at room temperature in a dark place, to print fine lines of approx. 0.3 mm as well as solid images, and the obtained images were visually observed to evaluate the image quality according to the evaluation criteria below.

Evaluation Criteria

[0125]

　　○: There are no smudges, mottled areas, or streaks.
　　△: There are slight smudges, mottled areas, and/or streaks (suitable for practical use).
　　×: Smudges, mottled areas, and/or streaks are clearly visible (not suitable for practical use).

<Drying Property>

The primer composition in each of the Examples and Comparative Examples was applied on an OPP film (P2161, 25 μm, Toyobo Co., Ltd.) using a #4 bar coater, and then dried using a dryer with its blower opening fixed at a position 10 cm above the film, and the time it took for the primer composition to become completely dry was measured.

Evaluation Criteria

○: Completely dry in less than 3 seconds.

Δ: Completely dry in less than 5 seconds.

×: Takes more than 5 seconds to completely dry.

<Transparency>

The printed matter comprising an OPP film on which the primer in each of the Examples and Comparative Examples had been printed according to the method described above, was heated for 24 hours in an oven set to 90% in humidity and 40°C in temperature, after which the condition of the printed matter was visually observed to evaluate the image quality according to the evaluation criteria below.

Evaluation Criteria

○: Transparent.

Δ: Slightly opaque (suitable for practical use).

×: Clearly opaque (not suitable for practical use)

[Table 1]

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Cohesion promoters | Calcium acetate | 0.1 | 2.0 | 10.0 | - | - | - | - | 2.0 | 2.0 | 2.0 | 2.0 |
| | Calcium chloride | - | - | - | 1.3 | - | - | - | - | - | - | - |
| | Magnesium chloride | - | - | - | - | 1.1 | - | - | - | - | - | - |
| | Citric acid | - | - | - | - | - | 2.2 | - | - | - | - | - |
| | Succinic acid | - | - | - | - | - | - | 1.3 | - | - | - | - |
| Surfactants (A) | Acetylene-based | 0.5 | 0.5 | 0.5 | 0.5 | 0.5 | 0.5 | 0.5 | 0.5 | 0.5 | 0.5 | 0.5 |
| | Silicone-based | - | - | - | - | - | - | - | - | - | - | - |
| Surfactants (B) | NIKKOL TMGS-15V | 0.5 | 0.5 | 0.5 | 0.5 | 0.5 | 0.5 | 0.5 | 0.01 | 1.0 | - | - |
| | AMIET 320 | - | - | - | - | - | - | - | - | - | 0.5 | - |
| | NIKKOL TS-10V | - | - | - | - | - | - | - | - | - | - | 0.5 |
| Resin emulsions | Polyolefin-based resin | 5.0 | 5.0 | 5.0 | 5.0 | 5.0 | 5.0 | 5.0 | 5.0 | 5.0 | 5.0 | 5.0 |
| | Polyurethane-based resin | - | - | - | - | - | - | - | - | - | - | - |
| Water | | 93.9 | 92.0 | 84.0 | 92.7 | 92.9 | 91.8 | 92.7 | 92.49 | 91.5 | 92.0 | 92.0 |
| Total | | 100.0 | 100.0 | 100.0 | 100.0 | 100.0 | 100.0 | 100.0 | 100.0 | 100.0 | 100.0 | 100.0 |
| Storage Stability | | ○ | ○ | △ | ○ | ○ | ○ | ○ | ○ | ○ | ○ | ○ |
| Primer printability | Immediately after manufacture | △ | ○ | △ | ○ | ○ | ○ | ○ | △ | △ | ○ | ○ |
| | 1 month after manufacture | △ | ○ | △ | ○ | ○ | ○ | ○ | △ | △ | ○ | ○ |
| Drying property | | ○ | ○ | ○ | ○ | ○ | ○ | ○ | ○ | ○ | ○ | ○ |
| Transparency | | ○ | ○ | ○ | ○ | ○ | ○ | ○ | ○ | △ | ○ | ○ |

EP 4 397 727 A1

|  |  | Examples | | | | | | | | | | | |
|---|---|---|---|---|---|---|---|---|---|---|---|---|---|
|  |  | 12 | 13 | 14 | 15 | 16 | 17 | 18 | 19 | 20 | 21 | 22 | 23 |
| Cohesion promoters | Calcium acetate | 2.0 | 2.0 | 2.0 | 2.0 | 2.0 | 2.0 | 2.0 | 2.0 | 2.0 | 2.0 | 2.0 | 2.0 |
|  | Calcium chloride | - | - | - | - | - | - | - | - | - | - | - | - |
|  | Magnesium chloride | - | - | - | - | - | - | - | - | - | - | - | - |
|  | Citric acid | - | - | - | - | - | - | - | - | - | - | - | - |
|  | Succinic acid | - | - | - | - | - | - | - | - | - | - | - | - |
| Surfactants (A) | Acetylene-based | 0.5 | 0.5 | 0.01 | 1.0 | - | 0.5 | 0.5 | 0.5 | 0.5 | 0.5 | 0.5 | 0.5 |
|  | Silicone-based | - | - | - | - | 0.5 | - | - | - | - | - | - | - |
| Surfactants (B) | NIKKOL TMGS-15V | 0.5 | 0.5 | 0.5 | 0.5 | 0.5 | 0.5 | 0.5 | 0.5 | 0.5 | 0.5 | 0.5 | 0.5 |
|  | AMIET 320 | 0.5 | - | - | - | - | - | - | - | - | - | - | - |
|  | NIKKOL TS-10V | - | 0.5 | - | - | - | - | - | - | - | - | - | - |
| Solvents | 2-propanol | - | - | - | - | - | - | - | - | - | 0.5 | - | - |
|  | 1,2-propanediol | - | - | - | - | - | - | - | - | - | - | 0.5 | - |
|  | 1,2-butanediol | - | - | - | - | - | - | - | - | - | - | - | 0.5 |
| Resin emulsions | Polyolefin-based resin | 5.0 | 5.0 | 5.0 | 5.0 | 5.0 | 0.5 | 10.0 | - | 5.0 | 5.0 | 5.0 | 5.0 |
|  | Polyurethane-based resin | - | - | - | - | - | - | - | 5.0 | 5.0 | - | - | - |
|  | Water | 91.5 | 91.5 | 92.49 | 91.5 | 92.0 | 96.5 | 87.0 | 92.0 | 87.0 | 91.5 | 91.5 | 91.5 |
|  | Total | 100.0 | 100.0 | 100.0 | 100.0 | 100.0 | 100.0 | 100.0 | 100.0 | 100.0 | 100.0 | 100.0 | 100.0 |
| Storage stability |  | ○ | ○ | ○ | ○ | ○ | ○ | △ | ○ | ○ | ○ | ○ | ○ |
| Primer printability | Immediately after manufacture | △ | △ | ○ | △ | ○ | △ | ○ | ○ | ○ | ○ | ○ | ○ |
|  | 1 month after manufacture | △ | △ | ○ | △ | ○ | △ | △ | ○ | ○ | △ | ○ | ○ |
| Drying property |  | ○ | ○ | ○ | ○ | ○ | ○ | ○ | ○ | ○ | ○ | ○ | △ |
| Transparency |  | ○ | ○ | ○ | ○ | ○ | ○ | ○ | ○ | ○ | ○ | △ | △ |

| | | Comparative Examples | | | | | | | | |
|---|---|---|---|---|---|---|---|---|---|---|
| | | 1 | 2 | 3 | 4 | 5 | 6 | 7 | 8 | 9 |
| Cohesion promoter | Calcium acetate | 2.0 | 2.0 | 2.0 | 2.0 | 2.0 | 2.0 | 2.0 | 2.0 | 2.0 |
| Surfactants (A) | Acetylene-based | 0.5 | 0.5 | 0.5 | 0.5 | 0.5 | 0.5 | 0.5 | 0.5 | 0.5 |
| | Silicone-based | - | - | - | - | - | - | - | - | - |
| Surfactants (B) | NIKKOL TMGS-15V | - | 5.0 | - | - | - | 0.5 | 0.5 | 0.5 | 0.5 |
| | AMIET 320 | - | - | - | - | - | - | - | - | - |
| | NIKKOL TS-10V | - | - | - | - | - | - | - | - | - |
| Other surfactants | AMIET 105 | - | - | 0.5 | - | - | - | - | - | - |
| | NONION LT-280W | - | - | - | 0.5 | - | - | - | - | - |
| | EMULGEN 1108 | - | - | - | - | 0.5 | - | - | - | - |
| Solvents | 2-propanol | - | - | - | - | - | 4.0 | - | - | - |
| | 1,2-propane diol | - | - | - | - | - | - | 4.0 | - | - |
| | 1,2-butanediol | - | - | - | - | - | - | - | 4.0 | - |
| Resin emulsions | Polyolefin-based resin | 5.0 | 5.0 | 5.0 | 5.0 | 5.0 | 5.0 | 5.0 | 5.0 | - |
| | Polyurethane-based resin | - | - | - | - | - | - | - | - | - |
| | Styrene-acrylic-based resin | - | - | - | - | - | - | - | - | 5.0 |
| Water | | 92.5 | 87.5 | 92.0 | 92.0 | 92.0 | 88.0 | 88.0 | 88.0 | 92.0 |
| Total | | 100.0 | 100.0 | 100.0 | 100.0 | 100.0 | 100.0 | 100.0 | 100.0 | 100.0 |
| Storage Stability | | ○ | ○ | x | ○ | ○ | Δ | ○ | ○ | ○ |
| Primer printability | Immediately after manufacture | x | x | - | x | x | ○ | ○ | ○ | x |
| | 1 month after manufacture | x | x | - | x | x | x | ○ | ○ | x |
| Drying property | | ○ | ○ | - | ○ | ○ | ○ | Δ | x | ○ |
| Transparency | | ○ | x | - | ○ | ○ | ○ | x | x | ○ |

**EP 4 397 727 A1**

The Examples, representing examples conforming to the present invention, demonstrated the effects of excellent storage stability and printability both immediately after manufacture and 1 month after manufacture, as well as excellent drying property and transparency.

By contrast, Comparative Example 1 containing no surfactant (B) demonstrated lower primer printability immediately after and 1 month after the manufacture of the primer.

Comparative Example 2 containing over 3.0% by mass of surfactant (B) had lower printability immediately after and 1 month after manufacture, and also the printed coating film was not transparent.

Comparative Example 3 containing no surfactant (B) but using other surfactant along with surfactant (A) resulted in lower storage stability, while other effects could not be confirmed. Similarly, Comparative Examples 4 and 5 using other surfactants resulted in lower primer printability immediately after and 1 month after the manufacture of the primer. Comparative Examples 6 to 8 containing over 1.0% by mass of organic solvent resulted, in particular, in lowering printability 1 month after the manufacture of the primer, and also lowering transparency and/or drying property of the primer coating film. Additionally, Comparative Example 9 containing a resin emulsion being neither a polyolefin-based resin emulsion nor urethane-based resin emulsion led to lower primer printability immediately after and 1 month after the manufacture of the primer.

**Claims**

1. A primer composition containing a resin emulsion, a cohesion promoter, a surfactant, and water, the primer composition **characterized in that**:

   the resin emulsion includes at least one type selected from polyolefin-based resin emulsions and urethane-based resin emulsions;
   the surfactant includes one or more surfactants (A) selected from acetylene-based surfactants and silicone-based surfactants, and nonionic surfactant(s) (B) other than the surfactant(s) (A);
   the nonionic surfactant(s) (B) is/are nonionic surfactant(s) having a HLB value of 10.0 or greater but under 15.5 and also having multiple polyoxyalkylene groups in a molecule, and include(s) one or more nonionic surfactants selected from the group consisting of polyoxyalkylene group-containing fatty acid glyceryls, polyoxyalkylene group-containing aliphatic amines, and polyoxyalkylene group-containing sorbitan fatty acid esters;
   a content percentage of the nonionic surfactant(s) (B) in the primer composition is 3.0% by mass or lower; and
   no organic solvent is contained, or a content of organic solvent(s) in the primer composition is 1.0% by mass or lower.

2. The primer composition according to claim 1, **characterized in that** a ratio by mass of the surfactant(s) (A) to the nonionic surfactant(s) (B) (surfactant(s) (A) / nonionic surfactant(s) (B)) is 0.01 or greater but no greater than 100.

3. A primer layer **characterized by** being formed by the primer composition according to claim 1 or 2.

4. An ink set **characterized by** having the primer composition according to claim 1 or 2 and an aqueous inkjet ink composition.

5. A printed matter **characterized by** being obtained by printing using the ink set according to claim 4.

6. An image formation method **characterized by** using the ink set according to claim 4.

18

## INTERNATIONAL SEARCH REPORT

| International application No. |
| --- |
| **PCT/JP2022/023075** |

**A. CLASSIFICATION OF SUBJECT MATTER**

*C09D 11/54*(2014.01)i; *B41J 2/01*(2006.01)i; *C09D 5/00*(2006.01)i; *C09D 5/02*(2006.01)i; *C09D 7/40*(2018.01)i; *C09D 123/00*(2006.01)i; *C09D 175/04*(2006.01)i

FI:   C09D11/54; B41J2/01 501; C09D5/00 D; C09D5/02; C09D7/40; C09D123/00; C09D175/04

According to International Patent Classification (IPC) or to both national classification and IPC

**B. FIELDS SEARCHED**

Minimum documentation searched (classification system followed by classification symbols)

C09D1/00-201/10; B41J2/01

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 6837591 B1 (SAKATA INKS) 03 March 2021 (2021-03-03) claims 1-6, paragraphs [0017]-[0019], [0042]-[0043], [0107]-[0108], [0111], tables 1-2, examples 2, 20 | 1-6 |
| A | JP 2019-111763 A (TOYO INK SC HOLDINGS CO LTD) 11 July 2019 (2019-07-11) claims 1-8, table 1, examples 1-67 | 1-6 |
| A | JP 2017-61124 A (FUJI XEROX CO LTD) 30 March 2017 (2017-03-30) claims 1-12, paragraphs [0120], [0142], table 1, example 1, comparative example 6 | 1-6 |
| A | JP 2009-262549 A (SEIKO EPSON CORP) 12 November 2009 (2009-11-12) claims 1-12, table 1, examples 1-9 | 1-6 |
| A | WO 2018/181527 A1 (DNP FINE CHEMICALS CO LTD) 04 October 2018 (2018-10-04) claims 1-6, table 1, examples 1-19 | 1-6 |

| ☐ Further documents are listed in the continuation of Box C. | ☑ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **08 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 397 727 A1**

<table>
<tr><td colspan="2" rowspan="2"><b>INTERNATIONAL SEARCH REPORT</b><br>Information on patent family members</td><td colspan="2">International application No.<br><br><b>PCT/JP2022/023075</b></td></tr>
</table>

| Patent document cited in search report | Publication date (day/month/year) | Patent family member(s) | Publication date (day/month/year) |
|---|---|---|---|
| JP 6837591 B1 | 03 March 2021 | (Family: none) | |
| JP 2019-111763 A | 11 July 2019 | US 2021/0130639 A1<br>claims, table 1, examples 1-67<br>EP 3733425 A1<br>WO 2019/130704 A1<br>JP 6388243 B1 | |
| JP 2017-61124 A | 30 March 2017 | US 2017/0088739 A1<br>claims, example 1,<br>comparative example 6, table 1 | |
| JP 2009-262549 A | 12 November 2009 | US 2009/0258203 A1<br>claims, table 1, examples 1-9 | |
| WO 2018/181527 A1 | 04 October 2018 | US 2020/0070554 A1<br>claims, table 1, examples 1-19<br>EP 3584086 A1<br>CN 110461616 A<br>TW 201843283 A<br>JP 2018-171872 A<br>JP 6307195 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017061124 A
- JP 2019111763 A
- JP 2017088646 A
- JP 2018012219 A
- JP 2019073608 A

- JP 2021055093 A
- JP 2021054084 A
- JP 2020075954 A
- JP 2000094825 A
- WO 2005116147 A